# EUROPÄISCHE PATENTSCHRIFT

(11) **EP 1 400 383 B1**
(45) Veröffentlichungstag und Bekanntmachung des Hinweises auf die Patenterteilung: **26.10.2005**
(21) Anmeldenummer: 03015480.1
(22) Anmeldetag: 09.07.2003
(51) Int. Cl.: B60H 1/22, B60H 1/00

(54) **Temperiersystem für ein Fahrzeug**
System for controlling the temperature within a vehicle
Système pour tempérer l'intérieur d'un véhicule

(30) Priorität: 19.09.2002 DE 10243562
(43) Veröffentlichungstag der Anmeldung: 24.03.2004
(73) Patentinhaber: J. Eberspächer GmbH & Co. KG, 73730 Esslingen (DE)
(72) Erfinder: Eberspach, Günter, 72649 Wolfschlugen (DE)
(74) Vertreter: Ruttensperger, Bernhard

(56) Entgegenhaltungen:
- EP-A- 0 950 587
- DE-A- 10 007 195
- DE-A- 19 722 577
- DE-C- 4 105 143
- DE-C- 19 942 286
- FR-A- 2 789 034

## Beschreibung

Die vorliegende Erfindung betrifft ein Temperiersystem für ein Fahrzeug, umfassend eine Temperieranordnung, eine Ansteueranordnung zum Ansteuern der Temperieranordnung sowie eine Sensoranordnung zur Erzeugung einer im Zusammenhang mit dem klimatischen Umfeld des Fahrzeugs stehenden Sensorausgabe, wobei die Ansteueranordnung die Temperieranordnung beruhend auf der Sensorausgabe ansteuert, gemäß dem Oberbegriff des Anspruchs 1.

Aus der DE 100 07 195 A1 ist ein Temperiersystem für ein Fahrzeug bekannt, bei welchem ein im Standheizungsmodus zu betreibendes Luftheizgerät so programmiert werden kann, dass es vor dem eingebbaren Zeitpunkt einer beabsichtigten Nutzungsaufnahme des Fahrzeugs für eine ausreichende Erwärmung des Fahrzeuginnenraums sorgt. Hierzu wird das Sensorsignal eines Außentemperatursensors ausgewertet, wobei dann, wenn dieses Signal auf eine niedrigere Außentemperatur hindeutet, die Heizbetriebsdauer, die für das Heizgerät zum Heizen vor dem Zeitpunkt der Nutzungsaufnahme vorgegeben wird, vergrößert wird, während bei höherer Außentemperatur diese Betriebsdauer des Heizgeräts zum Einsparen von Energie und zum Vermeiden eines Überheizens des Fahrzeugs verkürzt wird. Durch einen derartigen Standheizmodus, der die klimatischen Bedingungen im Umfeld des Fahrzeugs, insbesondere die Temperaturbedingungen im Umfeld des Fahrzeugs, berücksichtigt, wird es möglich, das Fahrzeug so zu temperieren, dass es im Wesentlichen unabhängig von den klimatischen Bedingungen zum Zeitpunkt der Nutzungsaufnahme einen definierten Zustand, also beispielsweise eine definierte Temperatur im Fahrzeuginnenraum aufweist.

Ein gattungsgemäßes Temperiersystem ist aus der EP 0 950 587 A1 bekannt.

Bei diesem bekannten System ist an einer Fahrzeugscheibeninnenseite ein Regensensor vorhanden, der dazu ausgebildet ist, die Belegung der Außenseite der Fahrzeugscheibe zu erfassen bzw. ein mit der Belegung korrespondierendes Signal zu liefern. Beruhend auf diesem Signal kann eine Abtaueinrichtung aktiviert werden, um dafür zu sorgen, dass das an der Außenseite des Fahrzeugs gebildete Eis oder sich möglicherweise demnächst bildende Eis entfernt wird bzw. dessen Bildung grundsätzlich verhindert wird. Dies kann nicht nur während der Fahrt oder des Betriebs vorgenommen werden. Auch bei abgestelltem Fahrzeug, beispielsweise während einer frostigen Nacht, kann bei aktiviertem Stand-By-Betrieb die Scheibe permanent überwacht werden und bei Erkennung einer Belegung dafür gesorgt werden, dass durch entsprechende Erwärmung bereits dünne Eisschichten wieder abgetaut werden.

Die DE 197 22 577 A1 offenbart ein Temperiersystem, bei welchem sensorisch die Temperatur an der Innenseite einer Fahrzeugfensterscheibe überwacht wird. Zusammen mit einem die Luftfeuchtigkeit im Fahrzeuginnenraum repräsentierenden Sensorsignal wird diese Temperaturgröße dazu genutzt, im Betrieb das Beschlagen der Fensterscheiben bereits im Vorfeld zu unterbinden.

Auch die DE 199 42 286 C1 offenbart ein System, bei welchem beruhend auf der Temperatur im Fahrzeuginnenraum und der Luftfeuchtigkeit der Taupunkt ermittelt wird und ggf. durch entsprechende Luftströmungsbeeinflussung oder Temperaturänderung das Beschlagen der Fensterscheiben an der Innenseite unterbunden wird.

Die FR 2 789 034 A1 offenbart ein System, bei welchem durch Zusammenwirken eines Scheibenbelegungssensors und eines die Außentemperatur einer Fensterscheibe erfassenden Sensors Information geliefert wird. Diese Information wird dahingehend ausgewertet, ob beispielsweise ein Abwischen der Außenseite der Fensterscheibe durch Scheibenwischer erforderlich ist oder ggf. zusätzlich eine Heizung betrieben werden muss, um vor diesem Abwischen zunächst eine möglicerweise gebildete Eislage aufzutauen.

Die DE 41 05 143 C1 offenbart ein System, bei welchem unter Berücksichtigung der Fahrzeuginnenraumtemperatur, der Außentemperatur und der Information, es regnet oder nicht, verschiedene Systembereiche, wie z.B. ein Schiebedach, eine Heizeinrichtung oder eine Kühleinrichtung, angesteuert werden.

Es ist die Aufgabe der vorliegenden Erfindung, ein gattungsgemäßes Temperiersystem derart weiterzubilden, dass bei der thermischen Behandlung eines Fahrzeugs die Bedingungen im Umfeld desselben besser berücksichtigt werden können.

Erfindungsgemäß wird diese Aufgabe durch das im Anspruch 1 definierte Temperiersystem gelöst.

Bei der vorliegenden Erfindung wird also als Ansteuergröße bzw. der Ansteuerung zugrunde liegende Größe auch der Scheibenbelegungszustand bei einem Fahrzeug berücksichtigt. Damit kann berücksichtigt werden, dass beispielsweise bei gleicher Außentemperatur jedoch in Abhängigkeit von der Luftfeuchtigkeit in einem Fall die Scheiben eines Fahrzeugs außen angefroren sein können, während im anderen Fall ein derartiges Anfrieren nicht vorhanden ist und beispielsweise die Scheiben nur feucht belegt sind oder auch trocken sind. Durch das Miteinbeziehen des Sensorsignals eines Sensors, der den Scheibenbelegungszustand detektiert, wird es möglich, verschiedene Scheibenbelegungszustände zu unterscheiden und entsprechend der getroffenen Unterscheidung dann entsprechend differenzierte Ansteuerungsmaßnahmen für die Temperieranordnung bereitzuhalten.

Bei dem erfindungsgemäßen System wird weiterhin die Temperieranordnung also so eingesetzt, dass in Abhängigkeit der verschiedenen Sensorausgaben und insbesondere unter Berücksichtigung der Scheibenbelegung die Betriebszeitdauer der Heizeinrichtung unmittelbar vor dem vorgegebenen Zeitpunkt der Nutzungsaufnahme festgelegt wird, so dass im Zeitpunkt der beabsichtigten Nutzungsaufnahme, also mit Ablauf der Heizbetriebszeitdauer, das Fahrzeug im gewünschten Zustand ist.

Die Ansteueranordnung bestimmt also mit dem vorgegebenen Zeitpunkt der Nutzungsaufnahme und der Heizbetriebsdauer einen Zeitpunkt der Inbetriebnahme der Temperieranordnung beruhend auf dem Sensorsignal des wenigstens einen Scheibenbelegungssensors. Es wird also nach Art eines Standtemperiersystems in Abhängigkeit von dem vorliegenden bzw. erfassten Scheibenbelegungszustand festgelegt, wann der Betrieb beginnen soll.

Bei dem erfindungsgemäßen System ist vorgesehen, dass die Temperieranordnung eine Heizeinrichtung umfasst, welche die Ansteueranordnung ansteuert. Die Sensoranordnung umfasst einen Außentemperatursensor, und die Ansteuer-anordnung gibt für die Heizeinrichtung eine Heizbetriebszeitdauer unmittelbar vor einem vorgegebenen Nutzungsaufnahmezeitpunkt beruhend auf dem Sensorsignal des wenigstens einen Scheibenbelegungssensors und dem Sensorsignal des Außentemperatursensors vor.

Weiter ist es möglich, dass die Temperieranordnung eine Klimatisierungseinrichtung umfasst, welche die Ansteueranordnung beruhend auf dem Sensorsignal des wenigstens einen Scheibenbelegungssensors ansteuert. Unter Klimatisierungseinrichtung wird im Sinne der vorliegenden Erfindung allgemein eine Einrichtung verstanden, die dazu in der Lage ist, die in einen Fahrzeuginnenraum einzuspeisende Luft zu kühlen oder/und ihr Feuchtigkeit zu entziehen.

Weiter kann vorgesehen sein, dass die Temperieranordnung eine elektrisch betreibbare Zusatzheizeinrichtung, vorzugsweise elektrisch betreibbare Scheibenheizung oder/und elektrisch betreibbare Spiegelheizung oder/und elektrisch betreibbare Aktuatorheizung, umfasst, welche die Ansteueranordnung beruhend auf dem Sensorsignal des wenigstens einen Scheibenbelegungssensors ansteuert. Moderne Kraftfahrzeuge weisen mehr und mehr nicht nur heizbare Heckscheiben, sondern beispielsweise auch heizbare Frontscheiben auf. Wird in erfindungsgemäßer Art und Weise erkannt, dass beispielsweise die Frontscheibe vereist ist, kann diese Information ebenfalls dazu genutzt werden, bereits vor der Nutzungsaufnahme des Fahrzeugs durch antizipierendes Betreiben der Frontscheibenheizung die Frontscheibe zu enteisen, so dass zum Zeitpunkt der Nutzungsaufnahme für den Fahrer ein die freie Sicht nach vorne behindernder Belag der Fensterscheibe im Wesentlichen nicht mehr vorhanden ist. Dies betrifft selbstverständlich auch andere Systembereiche, wie z.B. die heizbaren Spiegel, insbesondere Außenspiegel eines Fahrzeugs, selbstverständlich auch die heizbare Heckscheibe oder irgendwelche Aktuatorsysteme, beispielsweise für die Außenspiegel, die bei sehr niedrigen Außentemperaturen zum Vereisen neigen können und insofern nicht mehr oder nicht mehr in gewohnter oder korrekter Art und Weise ansteuerbar wären.

Um in einem Zustand, in welchem das Fahrzeug an sich nicht in Betrieb gesetzt ist und insofern sein Antriebsaggregat nicht zur Einspeisung von Elektrizität in das Bordnetz oder zur Bereitstellung sonstiger Energie für Nebenaggregate zur Verfügung steht, ausreichend Energie bereitstellen zu können, wird vorgeschlagen, dass eine brennstoffbetreibbare Energiequelle vorgesehen ist zum Versorgen der Klimatisierungseinrichtung oder/und der elektrisch betreibbaren Zusatzeinrichtung mit Energie. Auch dabei ist es dann vorteilhaft, wenn die Ansteueranordnung die Energiequelle beruhend auf dem Sensorsignal des wenigstens einen Scheibenbelegungssensors ansteuert.

Das erfindungsgemäße System kann derart aufgebaut sein, dass die Temperieranordnung ein Luftverteilungssystem zur veränderbaren Verteilung der in einen Fahrzeuginnenraum einzuspeisenden Luft umfasst, und dass die Ansteueranordnung das Luftverteilungssystem beruhend auf dem Sensorsignal des wenigstens einen Scheibenbelegungssensors ansteuert. Durch die Verteilung der in einen Fahrzeuginnenraum einzuspeisenden Luftmenge in gezielter Art und Weise ist es ebenso möglich, eine verbesserte Vorbereitung des Fahrzeugs auf die Nutzungsaufnahme bzw. auch eine verbesserte Betreibbarkeit im Nutzungszustand zu erlangen. Beispielsweise kann vorgesehen sein, dass die Ansteueranordnung dazu ausgebildet ist, bei erkannter Belegung einer Fensterscheibe, beispielsweise Vereisung einer Fensterscheibe, während der Heizbetriebsdauer der Heizeinrichtung wenigstens zeitweise einen größeren Luftstrom in den Bereich der Fensterscheibe zu leiten, als in einem Zustand, in welchem das Sensorsignal des wenigstens einen Scheibenbelegungssensors nicht auf vorliegende Belegung der Fensterscheibe oder auf verminderte Belegung der Fensterscheibe hinweist. Es wird also somit möglich, in einem Zustand, in dem beispielsweise auf eine vereiste Fensterscheibe geschlossen werden kann, eine verstärkte Anströmung dieser Fensterscheibe mit warmer Luft vorzusehen, bis, entweder erkannt durch eine Änderung des Sensorsignals des wenigstens einen Scheibenbelegungssensors oder nach Ablauf einer vorgegebenen Zeit, eine andere Verteilung der Luftmenge aufgenommen wird, um beispielsweise den Bodenraum des Fahrzeugs verstärkt anzuströmen, so dass die erwärmte Luft dann sich im Fahrzeuginnenraum von unten nach oben bewegen wird und somit eine sehr gleichmäßige Erwärmung erreicht wird.

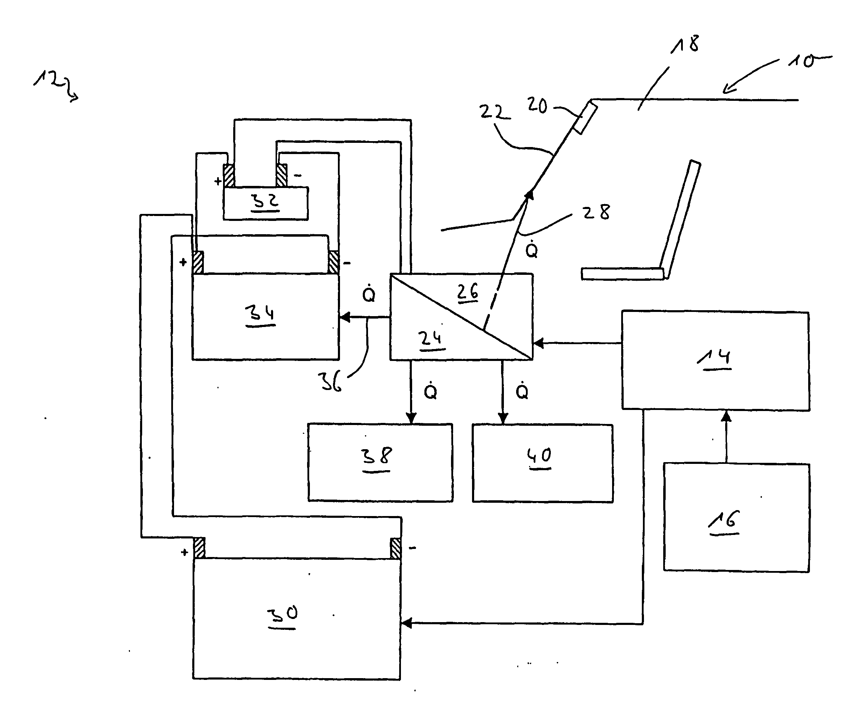

Die vorliegende Erfindung wird nachfolgend mit Bezug auf die beiliegende Figur detailliert beschrieben, welche blockdarstellungsartig den Aufbau eines erfindungsgemäßen Temperiersystems zeigt.

Dieses in einem nur schematisch angedeuteten Fahrzeug 10 vorgesehene Temperiersystem 12 umfasst als elementaren Bestandteil eine Ansteueranordnung 14, die, wie im Folgenden noch beschrieben, verschiedene Systembereiche ansteuert und die dazu Informationen von einer durch den Block 16 symbolisierten Sensoranordnung empfängt. Diese Sensoranordnung kann eine Vielfalt verschiedenster Sensoren aufweisen, wie z.B. einen nicht dargestellten Außentemperatursensor, einen Innentemperatursensor zur Erfassung der Temperatur in einem Fahrzeuginnenraum 18 und einen Scheibenbelegungssensor 20, der im dargestellten Beispiel den Belegungszustand beispielsweise der Außenseite einer Windschutzscheibe 22 des Fahrzeugs 10 erfassen kann. Der Scheibenbelegungssensor 20 kann beispielsweise derart aufgebaut sein, dass von einer Lichtquelle über einen Lichtleiter und einen Einspeisungsbereich ein vergleichsweise stark fokusierter Lichtstrahl in die Windschutzscheibe 22 eingespeist wird, so dass er in der Windschutzscheibe an den Oberflächen derselben mehrfach reflektiert wird und dann über einen Auskopplungsbereich und einen weiteren Lichtleiter zu einem Detektor geleitet wird. Je nachdem, wie stark die Windschutzscheibe 22 an ihrer Außenseite belegt ist, wird bei der mehrfach auftretenden Reflexion an der Außenoberfläche ein mehr oder weniger großer Anteil des Lichts ausgekoppelt, so dass die noch in den Detektor gelangende Lichtmenge im Vergleich zu der ursprünglich eingespeisten Lichtmenge ein Indikator dafür ist, wie groß der ausgekoppelte Lichtanteil ist, was wiederum ein Indikator für die Belegung der Windschutzscheibe 22 ist. Durch möglicherweise auch wellenlängenselektive Auswertung des Detektorsignals kann möglicherweise auf unterschiedliche Belegungszustände, beispielsweise mit Wasser, mit Eis, mit Schnee oder mit Verunreinigungen geschlossen werden.

Die verschiedenen angesprochenen Sensoren liefern also jeweils Sensorsignale, die in ihrer Gesamtheit als Sensorausgabe betrachtet werden können und, möglicherweise nach entsprechender Aufbereitung, in die Ansteueranordnung 14 eingespeist werden. Diese Ansteueranordnung 14 kann dann beruhend auf diesen verschiedenen Sensorsignalen verschiedene Systemkomponenten, wie z. B. eine Heizeinrichtung 24 oder eine Klimatisierungseinrichtung 26, in Betrieb setzen. Beispielsweise kann zur Durchführung eines Standheizbetriebs vorgesehen sein, dass in der Ansteueranordnung 14 Information über den Zeitpunkt der geplanten Nutzungsaufnahme des Fahrzeugs hinterlegt wird. In Abhängigkeit von dem Sensorsignal des nicht dargestellten Außentemperatursensors berechnet die Ansteueranordnung 14 eine Heizbetriebszeitdauer, die erforderlich ist, um durch entsprechendes Betreiben der beispielsweise brennstoffbetriebenen Heizeinrichtung 24 den Fahrzeuginnenraum 18 auf die gewünschte Temperatur zu bringen. Bei niedrigeren Außentemperaturen wird hierzu eine längere Zeitdauer erforderlich sein, als bei höheren Außentemperaturen. Erfindungsgemäß kann dann das Sensorsignal des Scheibenbelegungssensors 20 zusätzlich noch genutzt werden, um diese Heizbetriebszeitdauer noch verbessert an die klimatischen Bedingungen im Umfeld des Fahrzeugs 10 anzupassen. Wird beispielsweise erkannt, dass die Windschutzscheibe 22 außen angefroren ist, also eine entsprechende Belegung derselben vorliegt, kann dafür gesorgt werden, dass um ein bestimmtes Ausmaß, das mit der Stärke der Belegung korreliert sein kann, länger geheizt wird, als in einem Falle, in welchem eine entsprechende Belegung nicht vorliegt. Ferner kann bei erkannter Vereisung der Windschutzscheibe 22 vorgesehen sein, dass ein durch ein durch den Pfeil 28 symbolisiertes Luftverteilungssystem in den Fahrzeuginnenraum eingespeister Luftstrom verstärkt in Richtung zur Windschutzscheibe 22 geleitet wird, so dass beispielsweise am Beginn der Heizbetriebszeitdauer zunächst verstärkt für ein Abtauen der Windschutzscheibe 22 gesorgt wird, und erst dann, wenn beispielsweise durch den Sensor 20 erkannt wird, dass eine Vereisung nicht mehr vorliegt, beispielsweise die Windschutzscheibe außen nur noch feucht ist, kann verstärkt der Luftstrom in Richtung zum Bodenbereich des Fahrzeuginnenraums 18 geleitet werden, um eine möglichst gleichmäßige Erwärmung zu erlangen.

Durch diese Mitberücksichtigung der äußeren klimatischen Bedingungen beispielsweise im Standheizbetriebsmodus wird es möglich, im Zeitpunkt des Nutzungsbeginns des Fahrzeugs dieses so bereitzustellen, wie es von einem Fahrer gewünscht wird. Hier kann in der Ansteueranordnung 14 eine selbstlernende Prozedur vorgesehen sein, die unter Berücksichtigung der zeitlichen Änderung des Sensorsignals des Scheibenbelegungssensors 20 lernen kann, in welchem Ausmaß die Heizbetriebszeitdauer verlängert werden muss bzw. das verstärkte Anströmen der Windschutzscheibe 22 mit erwärmter Luft durchgeführt werden muss, um die gewünschte Erwärmung des Fahrzeuginnenraums 18 einerseits und Enteisung der Windschutzscheibe 22 bzw. der anderen an dem Fahrzeug 10 vorgesehenen Fensterscheiben andererseits zu erlangen. Dabei kann beispielsweise in der Ansteueranordnung 14 berücksichtigt werden, dass ein zeitlich vergleichsweise stark schwankendes Signal des Scheibenbelegungssensors 20 auf Regen hindeutet, während ein eine Belegung anzeigendes, jedoch vergleichsweise konstantes Signal auf Vereisung hindeutet. Vor allem der Hinweis auf Regen und somit hohe Luftfeuchtigkeit kann in Verbindung mit der Klimatisierungseinrichtung 26, welche ebenfalls unter Ansteuerung der Ansteueranordnung 14 steht, dazu genutzt werden, vor der Nutzungsaufnahme des Fahrzeugs 10 verstärkt getrocknete und ggf. gekühlte oder auch zusätzlich erwärmte Luft in den Fahrzeuginnenraum 18 einzuspeisen, um beim Einsteigen des Fahrers oder sonstiger Personen ein spontanes Beschlagen der Fensterscheiben zu verhindern.

Der Block 30 symbolisiert elektrisch betreibbare Zusatzheizgeräte, wie z.B. elektrisch betreibbare Scheibenheizungen, elektrisch betreibbare Außenspiegelheizungen, elektrisch betreibbare Bedienorganheizungen, beispielsweise Lenkradheizung, Schalthebelheizung o. dgl., elektrisch betreibbare Innenraumverkleidungsheizungen, elektrisch betreibbare Sitzheizungen und elektrisch betreibbare Aktuatorheizungen, beispielsweise für die Außenspiegelaktuatoren. All diese elektrisch betreibbaren Heizungen können ebenfalls unter der Ansteuerung der Ansteueranordnung 14 stehen und können, zumindest zum Teil auch in Abhängigkeit von Sensorsignalen des Scheibenbelegungssensors 20 angesteuert werden. Wird beispielsweise vor der Nutzungsaufnahme erkannt, dass die Fensterscheiben oder ggf. die Außenspiegel vereist sind, so kann, zusätzlich zum vorangehend beschriebenen Aktivieren der Heizeinrichtung 24, die Ansteueranordnung 14 auch verschiedene der elektrisch betreibbaren Zusatzheizungen, beispielsweise die Scheibenheizungen oder die Außenspiegelheizungen, aktivieren, um unterstützend für ein beschleunigtes Abtauen der angefrorenen Scheiben oder Spiegel zu sorgen, was zu einer Verkürzung der Standheizphase beitragen kann.

Da derartige elektrisch betreibbare Zusatzheizgeräte erhebliche Verbraucher elektrischer Energie darstellen, wird durch die in einem Fahrzeug vorgesehene Batterie 32 im Allgemeinen nicht ausreichend elektrische Energie bereitgestellt werden können. Es kann daher bei dem erfindungsgemäßen System 12 eine weitere durch den Block 34 symbolisierte Energiequelle vorgesehen sein, die elektrische Energie für die zusätzlichen Verbraucher bereitstellen kann. Diese Energiequelle 34 kann beispielsweise eine Brennstoffzelle umfassen, kann aber auch einen durch einen Stirlingmotor, einen Dampfmotor o. dgl. angetriebenen Generator umfassen. Insbesondere bei Einsatz derartiger thermodynamisch wirksamer Antriebe kann durch die Heizeinrichtung 24, wie durch einen Pfeil 36 angedeutet, Wärmeenergie bereitgestellt werden. Ferner kann die in der Heizeinrichtung 24 bereitgestellte Wärme zur Vorwärmung des durch den Block 38 symbolisierten Fahrzeugmotors oder zur Vorwärmung der durch den Block 40 symbolisierten Abgasanlage genutzt werden. In dem Falle, in dem die Energiequelle 34 eine Brennstoffzelle ist, kann die durch die Heizeinrichtung 24 bereitgestellte Wärme auch zur Erwärmung dieser Brennstoffzelle genutzt werden.

Insbesondere dann, wenn verschiedene der elektrischen Zusatzheizgeräte während einer Standtemperierphase zusätzlich zur Heizeinrichtung 24 oder zur Klimatisierungseinrichtung 26 zu betreiben sind, ist es vorteilhaft, auch die Energiequelle 34 durch die Ansteueranordnung 14 in Abhängigkeit vom Sensorsignal des Scheibenbelegungssensors 20 anzusteuern, so dass tatsächlich auch nur dann, wenn durch zusätzliche Energieverbraucher elektrische Energie gefordert wird, derartige elektrische Energie durch die Energiequelle 34 bereitgestellt wird. Diese zusätzlichen Energieverbraucher können grundsätzlich aber auch im Wesentlichen unabhängig oder zumindest zum Teil unabhängig von der Ausgabe des Sensors 20 betrieben werden, beispielsweise in der Art und Weise, dass eine vorgegebene Zeitdauer vor dem Zeitpunkt der Nutzungsaufnahme eine Aktivierung erfolgt, beispielsweise der Sitzheizung oder sonstiger den Fahrzeuginnenraum erwärmender und zum erhöhten Komfort beitragender Heizeinrichtungen.

Durch das erfindungsgemäße Temperiersystem wird es möglich, verbessert auf die Bedingungen im Umfeld eines Fahrzeugs zu reagieren und dieses vor der Nutzungsaufnahme verbessert auf die von einem Fahrer gewünschten Zustände einzustellen. Dies betrifft sowohl den Fall der Erwärmung dann, wenn vergleichsweise niedrige Außentemperaturen vorliegen, wobei hier die Heizeinrichtung 24 und verschiedene zusätzliche elektrische Heizeinrichtungen koordiniert zusammenarbeiten können, um verbessert und beschleunigt den gewünschten erwärmten Zustand zu erlangen und gleichzeitig auch für eine Enteisung der verschiedenen außen liegenden Scheibenbereiche zu sorgen, als auch den Fall des Kühlbetriebs bzw. einen Betrieb, in welchen getrocknete Luft eingespeist werden soll, um vorab das Beschlagen von Fensterscheiben bei hoher Luftfeuchtigkeit und beispielsweise entsprechenden Außentemperaturen zu vermeiden.

## Patentansprüche

1. Temperiersystem für ein Fahrzeug, umfassend eine Temperieranordnung (24, 26, 28, 30), eine Ansteueranordnung (14) zum Ansteuern der Temperieranordnung (24, 26, 28, 30) sowie eine Sensoranordnung (16, 20) zur Erzeugung einer im Zusammenhang mit dem klimatischen Umfeld des Fahrzeugs (10) stehenden Sensorausgabe, wobei die Ansteueranordnung (14) die Temperieranordnung (24, 26, 28, 30) beruhend auf der Sensorausgabe ansteuert, wobei die Temperieranordnung (24, 26, 28, 30) eine Heizeinrichtung (24) umfasst und wobei die Sensoranordnung (16, 20) einen Außentemperatursensor umfasst und wenigstens einen Scheibenbelegungssensor (20) zur Erzeugung eines im Zusammenhang mit einem Belegungszustand einer Fensterscheibe (22) des Fahrzeugs (10) stehenden Sensorsignals aufweist, welches Sensorsignal ein Teil der Sensorausgabe bildet,
**dadurch gekennzeichnet, dass** die Ansteueranordnung (14) für die Heizeinrichtung (24) eine Heizbetriebszeitdauer unmittelbar vor einem vorgegebenen Nutzungsaufnahmezeitpunkt beruhend auf dem Sensorsignal des wenigstens einen Scheibenbelegungssensors (20) und dem Sensorsignal des Außentemperatursensors vorgibt.

2. Temperiersystem nach Anspruch 1,
**dadurch gekennzeichnet, dass** die Temperieranordnung (24, 26, 28, 30) eine Klimatisierungseinrichtung (26) umfasst, welche die Ansteueranordnung (14) beruhend auf dem Sensorsignal des wenigstens einen Scheibenbelegungssensors (20) ansteuert.

3. Temperiersystem nach einem der Ansprüche 1 oder 2,
**dadurch gekennzeichnet, dass** die Temperieranordnung (24, 26, 28, 30) eine elektrisch betreibbare Zusatzheizeinrichtung (30), vorzugsweise elektrisch betreibbare Scheibenheizung oder/und elektrisch betreibbare Spiegelheizung oder/und elektrisch betreibbare Aktuatorheizung, umfasst, welche die Ansteueranordnung (14) beruhend auf dem Sensorsignal des wenigstens einen Scheibenbelegungssensors (20) ansteuert.

4. Temperiersystem nach Anspruch 2 oder 3,
**dadurch gekennzeichnet, dass** eine brennstoffbetreibbare Energiequelle (34) vorgesehen ist zum Versorgen der Klimatisierungseinrichtung (26) oder/und der elektrisch betreibbaren Zusatzeinrichtung (30) mit Energie.

5. Temperiersystem nach Anspruch 4,
**dadurch gekennzeichnet, dass** die Ansteueranordnung (14) die Energiequelle (34) beruhend auf dem Sensorsignal des wenigstens einen Scheibenbelegungssensors (20) ansteuert.

6. Temperiersystem nach einem der Ansprüche 1 bis 5,
**dadurch gekennzeichnet, dass** die Temperieranordnung (24, 26, 28, 30) ein Luftverteilungssystem (28) zur veränderbaren Verteilung der in einen Fahrzeuginnenraum (18) einzuspeisenden Luft umfasst, und dass die Ansteueranordnung (14) das Luftverteilungssystem (28) beruhend auf dem Sensorsignal des wenigstens einen Scheibenbelegungssensors (20) ansteuert.

7. Temperiersystem nach Anspruch 6,
**dadurch gekennzeichnet, dass** die Ansteueranordnung (14) dazu ausgebildet ist, bei erkannter Belegung einer Fensterscheibe (22), beispielsweise Vereisung einer Fensterscheibe (22), während der Heizbetriebsdauer der Heizeinrichtung (24) wenigstens zeitweise einen größeren Luftstrom in den Bereich der Fensterscheibe (22) zu leiten, als in einem Zustand, in welchem das Sensorsignal des wenigstens einen Scheibenbelegungssensors (20) nicht auf vorliegende Belegung der Fensterscheibe (22) oder auf verminderte Belegung der Fensterscheibe (22) hinweist.

## Claims

1. A temperature control system for a vehicle, comprising a temperature control assembly (24,26,28,30), an activating assembly (14) for activating the temperature control assembly (24,26,28,30) and a sensor assembly (16,20) for generating a sensor output associated with the climatic surroundings of the vehicle (10), wherein the activating assembly (14) activates the temperature control assembly (24,26,28,30) on the basis of the sensor output, wherein the temperature control assembly (24,26,28,30) comprises a heating device (24) and wherein the sensor assembly (16,20) comprises an outside-temperature sensor and has at least one screen coverage sensor (20) for generating a sensor signal associated with a coverage condition of a screen (22) of the vehicle (10), which sensor signal forms part of the sensor output,
**characterised in that** the activating assembly (14) for the heating device (24) presets a heating operation period immediately prior to a preset utilisation take-up time on the basis of the sensor signal of the at least one screen coverage sensor (20) and of the sensor signal of the outside-temperature sensor.

2. A temperature control system according to Claim 1,
**characterised in that** the temperature control assembly (24,26,28,30) has an air-conditioning device (26) which activates the activating assembly (14) on the basis of the sensor signal of the at least one screen coverage sensor (20).

3. A temperature control system according to either Claim 1 or Claim 2, **characterised in that** the temperature control assembly (24,26,28,30) comprises an electrically operated auxiliary heating device (30), preferably an electrically operated screen heater and/or electrically operated mirror heater and/or electrically operated actuator heater, which activates the activating assembly (14) on the basis of the sensor signal of the at least one screen coverage sensor (20).

4. A temperature control system according to Claim 2 or 3, **characterised in that** a fuel-powered energy source (34) is provided for supplying power to the air-conditioning device (26) and/or the electrically operated auxiliary heating device (30).

5. A temperature control system according to Claim 4,
**characterised in that** the activating assembly (14) activates the energy source (34) on the basis of the sensor signal of the at least one screen coverage sensor (20).

6. A temperature control system according to any one of Claims 1 to 5, **characterised in that** the temperature control assembly (24,26,28,30) comprises an air-flow control system (28) for variable distribution of the air to be admitted into a vehicle interior (18), and **in that** the activating assembly (14) activates the air-flow control system (28) on the basis of the sensor signal of the at least one screen coverage sensor (20).

7. A temperature control system according to Claim 6,
**characterised in that**, when coverage of a screen (22) is detected, for example ice build-up on a screen (22), during the heating operation period of the heating device (24), the activating assembly (14) is designed to direct temporarily a greater air flow into the region of the screen (22) than in a condition in which the sensor signal of the at least one screen coverage sensor (20) does not indicate the presence of coverage of the screen (22) or reduced coverage of the screen (22).

## Revendications

1. Système pour tempérer un véhicule, comprenant un dispositif pour tempérer (24, 26, 28, 30), un dispositif de commande (14) pour commander le dispositif pour tempérer (24, 26, 28, 30) ainsi qu'un dispositif détecteur (16, 20) pour produire une sortie de détecteur se trouvant en rapport avec le champ périphérique climatique du véhicule (10), le dispositif de commande (14) commandant le dispositif pour tempérer (24, 26, 28, 30) en se basant sur la sortie du détecteur, le dispositif pour tempérer (24, 26, 28, 30) comprenant un dispositif de chauffage (24) et le dispositif détecteur (16, 20) comprenant un détecteur de température extérieure et au moins un détecteur de recouvrement des vitres (20) afin de produire un signal de détecteur se trouvant en rapport avec un état de recouvrement d'une vitre (22) du véhicule (10), lequel signal de détecteur forme une partie de la sortie du détecteur, **caractérisé en ce que** le dispositif de commande (14) pour le dispositif de chauffage (24) prédéfinit une durée de fonctionnement du chauffage directement avant un moment prédéfini de saisie de l'utilisation en se basant sur le signal de détecteur du au moins un détecteur de recouvrement des vitres (20) et le signal de détecteur du détecteur de température extérieure.

2. Système pour tempérer selon la revendication 1, **caractérisé en ce que** le dispositif pour tempérer (24, 26, 28, 30) comprend un dispositif de climatisation (26), lequel commande le dispositif de commande (14) en se basant sur le signal de détecteur du au moins un détecteur de recouvrement des vitres (20).

3. Système pour tempérer selon l'une des revendications 1 ou 2, **caractérisé en ce que** le dispositif pour tempérer (24, 26, 28, 30) comprend de préférence un dispositif de chauffage complémentaire (30) pouvant fonctionner électriquement, de préférence un chauffage de vitres pouvant fonctionner électriquement et/ou un chauffage de miroir pouvant fonctionner électriquement ou/et un chauffage d'actionneur pouvant fonctionner électriquement, lequel commande le dispositif de commande (14) en se basant sur le signal de détecteur du au moins un détecteur de recouvrement des vitres (20).

4. Système pour tempérer selon la revendication 2 ou 3, **caractérisé en ce qu'**une source d'énergie (34) pouvant fonctionner avec du combustible est prévue pour alimenter en énergie le dispositif de climatisation (26) ou/et le dispositif complémentaire (30) pouvant fonctionner électriquement.

5. Système pour tempérer selon la revendication 4, **caractérisé en ce que** le dispositif de commande (14) commande la source d'énergie (34) en se basant sur le signal de détecteur du au moins un détecteur de recouvrement des vitres (20).

6. Système pour tempérer selon l'une des revendications 1 à 5, **caractérisé en ce que** le dispositif pour tempérer (24, 26, 28, 30) comprend un système de répartition de l'air (28) pour répartir de façon variable l'air à alimenter dans un espace intérieur de véhicule (18), et **en ce que** le dispositif de commande (14) commande le système de répartition de l'air (28) en se basant sur le signal de détecteur du au moins un détecteur de recouvrement des vitres (20).

7. Système pour tempérer selon la revendication 6, **caractérisé en ce que** le dispositif de commande (14) est conçu de manière à ce que, lors d'un recouvrement connu d'une vitre (22), par exemple lors du givrage d'une vitre (22), pendant la durée de fonctionnement du chauffage du dispositif de chauffage (24) soit dirigé, au moins par moments, un courant d'air plus important dans la zone de la vitre (22) que dans un état dans lequel le signal de détecteur du au moins un détecteur de recouvrement des vitres (20) n'indique pas un recouvrement présent de la vitre (22) ou un recouvrement réduit de la vitre (22).
